# FASCICULE DE BREVET EUROPEEN

(11) **EP 2 514 137 B1**
(45) Date de publication et mention de la délivrance du brevet: **11.05.2016**
(21) Numéro de dépôt: 10798963.4
(22) Date de dépôt: 15.12.2010
(51) Int. Cl.: H04L 12/10, G06F 13/40

(54) **DISPOSITIF DE CONNEXION VIA UNE LIAISON ETHERNET DE DEUX EQUIPEMENTS ET STATION D'ACCUEIL D'UN DE CES EQUIPEMENTS**
VORRICHTUNG FÜR DEN ANSCHLUSS VON ZWEI GERÄTEN ÜBER EINE ETHERNET-VERBINDUNG UND ANDOCKSTATION FÜR EINES DIESER GERÄTE
DEVICE FOR CONNECTING TWO APPARATUSES VIA AN ETHERNET LINK, AND DOCKING STATION FOR ONE OF SAID APPARATUSES

(30) Priorité: 16.12.2009 FR 0959045
(43) Date de publication de la demande: 24.10.2012
(73) Titulaire: SAGEM DEFENSE SECURITE, 92100 Boulogne Billancourt (FR)
(72) Inventeur: GUILLOT, François, F-75015 Paris (FR); DOMBLIDES, Nicolas, F-75015 Paris (FR)
(74) Mandataire: Lavialle, Bruno François Stéphane
(86) Numéro de dépôt international: PCT/EP2010/007645
(87) Numéro de publication internationale: WO 2011/072842

(56) Documents cités:
- US-A1- 2005 278 472
- US-A1- 2010 187 903
- US-B1- 6 643 566
- MENDELSON G: "All You Need To Know About Power over Ethernet (PoE) and the IEEE 802.3af Standard", INTERNET CITATION, 30 juin 2004 (2004-06-30), XP002372480, Extrait de l'Internet: URL:http://www.powerdsine.com/Documentatio n/WhitePapers/PoE_and_IEEE802_3 af.pdf [extrait le 2006-03-16]
- BELKIN: "USB Ethernet Adapter", INTERNET CITATION, 30 September 1998 (1998-09-30), XP002160168, Retrieved from the Internet: URL:http://www.belkin.com/support/download s/manuals/F5U011.pdf [retrieved on 2001-02-13]

## Description

La présente invention concerne un dispositif de connexion de deux équipements l'un à l'autre. L'un des équipements est par exemple une unité informatique et l'autre équipement est par exemple un périphérique d'entrée comme un clavier, un dispositif de pointage de type souris ou pavé tactile ou un périphérique de stockage de masse comme un disque dur externe ou une mémoire solide. L'invention a également pour objet une station d'accueil d'un tel équipement.

Les systèmes informatiques sont généralement construits autour d'une unité informatique, dite couramment centrale, à laquelle sont raccordés des périphériques. L'unité informatique incorpore le ou les processeurs, des mémoires hébergeant un système d'exploitation et des applications exécutés par le ou les processeurs. Les périphériques sont raccordés à l'unité informatique par des liaisons parallèles ou série. Les liaisons série mettant plus particulièrement en oeuvre un protocole de type USB pour « Universal Serial Bus » (bus série universel) se sont imposé dans les systèmes informatiques tant grand public qu'industriels. Ce type de liaison est également utilisable pour relier des périphériques entre eux.

Ce type de liaison série présente toutefois un certain nombre d'inconvénients rendant leur utilisation délicate dans certaines applications fortement contraintes notamment en ce qui concerne les décharges électrostatiques.

Parmi ces inconvénients, se trouve une absence d'isolation galvanique qui peut s'avérer extrêmement préjudiciable pour les éléments ainsi reliés lorsque la foudre touche l'installation électrique à laquelle l'un de ces éléments est raccordé.

Ce risque est d'ailleurs de plus en plus important dans les aéronefs modernes dans lesquels le fuselage peut de moins en moins jouer le rôle d'une cage de Faraday en raison de la présence croissante dans celui-ci de matériaux composites faiblement conducteurs. Ceci oblige à recourir à des composants non linéaires de type éclateurs, diodes foudres ou varistances. Les niveaux de courant à supporter étant relativement élevés (1500 V et 500 A pendant 100*µ*s), ces composants sont destinés à être fortement sollicités. A titre d'exemple, un composant limitant à 54 V un signal doit pouvoir supporter 40 kW pendant 100 *µ*s avec un derating en température de 60 %. Ces composants sont dès lors très volumineux et engendrent de très fortes capacités parasites entraînant des problèmes d'affaiblissement des signaux rapides. De surcroît, les circuits utilisant ces composants ne peuvent être testés qu'en utilisant des outillages coûteux et non dénués de dangers tant pour les composants du circuit que pour les opérateurs desdits outillages.

De plus, la faible conductivité du composite empêche l'utilisation de la masse mécanique comme référentiel en matière de compatibilité électromagnétique, au moins pour les composantes basses fréquences. La capacité maximum de couplage à la masse mécanique est également limitée à 150 nF, voire beaucoup moins puisqu'elle peut être inférieure à 100 pF.

En outre, ce type de liaison présente d'autres inconvénients lorsqu'elle est utilisée dans les systèmes informatiques embarqués à bord des aéronefs :
- une faible distance de liaison or, dans les aéronefs, les systèmes informatiques peuvent être éclatés pour optimiser l'utilisation de l'espace disponible de sorte que les différents éléments d'un système informatique embarqué sont souvent éloignés les uns des autres ;
- une absence de retour d'expérience à propos de ce type de liaison dans les applications aéronautiques.

Il en résulte que dans ces applications, les fonctions alimentation et communication sont séparées.

Le document US 2005/278472 divulgue un adaptateur USB-Ethernet permettant d'étendre la portée d'une liaison USB en intégrant les fonctions alimentation et communication.

Tout ou partie des inconvénients ci-dessus se présentent aussi avec un certains nombre de liaisons d'autres types et notamment PS2, ARINC 429, bus CAN... qu'elle que soit l'application envisagée.

Un but de l'invention est de fournir un moyen de liaison entre équipements électroniques ne présentant pas, ou que peu, les inconvénients précités.

A cet effet, on prévoit, selon l'invention, un dispositif de connexion d'un équipement électronique maître à un équipement électronique périphérique suivant la revendication 1.

Ainsi, le dispositif de l'invention permet de substituer à la liaison du premier type une liaison Ethernet qui est établie entre les équipements pour transmettre de manière fiable et robuste à la fois un signal de données et un courant d'alimentation tout en assurant une isolation galvanique entre les équipements. La liaison Ethernet autorise en outre des distances de communication relativement importantes.

De préférence, le module d'alimentation de l'unité de raccordement maître comprend un organe de régulation agencé pour réaliser un asservissement sur une valeur efficace de tension et sur une forme de courant en sortie du module d'alimentation.

Ceci permet d'optimiser les paramètres d'alimentation de l'équipement périphérique.

Avantageusement, le module d'alimentation de l'unité de raccordement périphérique comprend un pont de diodes et un condensateur.

Redresser le courant alternatif via un pont de diodes et un condensateur présente l'avantage d'être simple, fiable et peu coûteux.

L'invention a également pour objet une station d'accueil pour un équipement périphérique, la station d'accueil comportant un boîtier accueillant l'unité de raccordement périphérique d'un dispositif de connexion du type de l'invention.

D'autres caractéristiques et avantages de l'invention ressortiront à la lecture de la description qui suit de modes de réalisation particuliers non limitatifs de l'invention.

Il sera fait référence aux dessins annexés, parmi lesquels :

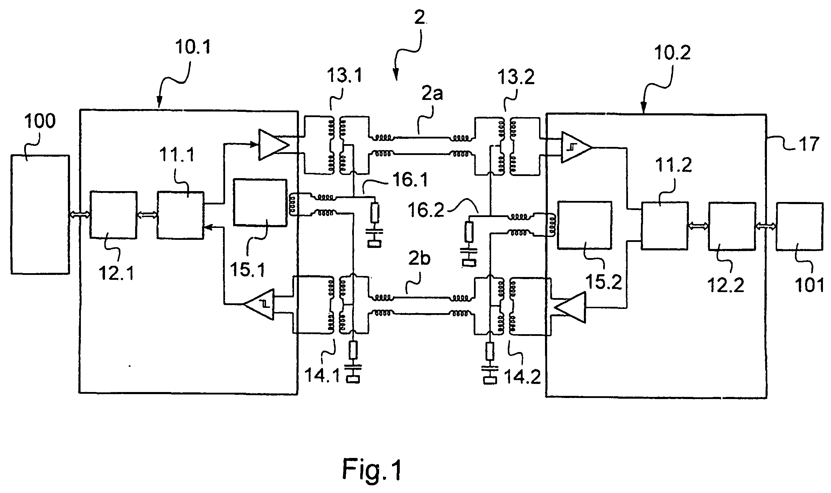

- la figure 1 est une vue schématique du circuit du dispositif conforme à l'invention,

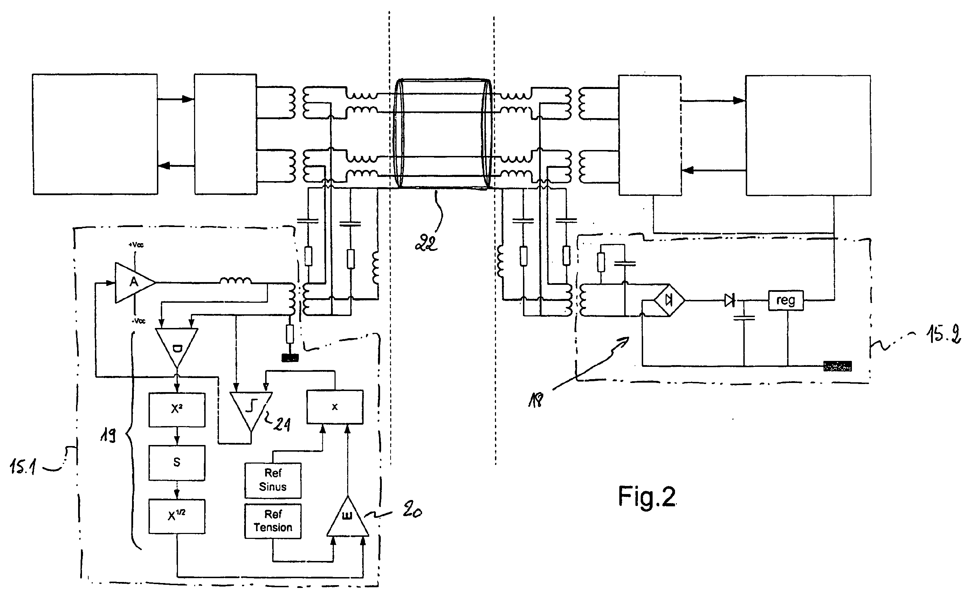

- la figure 2 est un schéma représentant symboliquement et plus particulièrement les modules d'alimentation.

En référence aux figures, le dispositif de connexion conforme à l'invention est destiné à permettre le raccordement d'un équipement électronique maître, ici l'unité centrale 100 d'un système informatique, à un équipement électronique périphérique, ici un organe d'entrée de données dans l'unité centrale, ici un clavier 101. L'invention est néanmoins utilisable pour tout type d'équipement comme un désignateur type souris ou pavé tactile, une mémoire de masse comme un disque dur ou une mémoire solide de type Flash, une imprimante...

L'unité centrale 100 et l'organe d'entrée 101 sont tous deux pourvus d'un port de raccordement externe d'un premier type, ici de type USB.

Le dispositif de connexion de l'invention, généralement désigné en 1, comporte une unité de raccordement maître 10.1 et une unité de raccordement périphérique 10.2 qui sont reliées l'une à l'autre par une liaison 2 d'un deuxième type, à savoir Ethernet, comportant une ligne d'émission 2.a et une ligne de réception 2.b. La ligne d'émission 2.a et la ligne de réception 2.b sont chacune formée d'une paire de conducteurs d'un câble Ethernet 22, ici de type QUADRAX.

L'unité de raccordement maître 10.1 comporte une interface USB/Ethernet 11.1 qui possède un port de raccordement externe USB 12.1 à l'unité centrale 100 et qui est reliée à la ligne d'émission 2.a et à la ligne de réception 2.b via un transformateur d'isolement 13.1, 14.1 respectivement.

L'unité de raccordement maître 10.1 comprend en outre un module d'alimentation 15.1 monté en mode commun entre la ligne d'émission 2.a et la ligne de réception 2.b pour émettre, via une isolation galvanique, un courant alternatif sur la liaison. L'isolation galvanique est assurée par un transformateur d'isolement 16.1 dont le secondaire est relié au point milieu du secondaire du transformateur 13.1 et au primaire du transformateur 14.1.

Le module d'alimentation 15.1 est agencé pour fournir un courant ayant une fréquence suffisamment basse pour ne pas perturber les communications et suffisamment élevée pour limiter la taille du transformateur 16.1. La plage de fréquences retenue est ici comprise entre 2 KHz et 100 KHz, voire entre 2 kHz et 10 kHz. Le transformateur est agencé pour procurer ici de préférence un isolement galvanique (courant continu, courant alternatif basses et hautes fréquences) supérieur à 1500 V.

Le module d'alimentation 15.1 comprend ainsi un convertisseur continu alternatif isolé assurant l'émission de puissance sur la liaison 2 et qui est associé à un organe de régulation. L'organe de régulation est agencé pour réaliser un asservissement sur une valeur efficace de tension et un asservissement sur une forme d'onde du courant (en sinus) en sortie du module d'alimentation 15.2. L'asservissement sur la forme d'onde est réalisé pour limiter le risque de perturbations électromagnétiques. Ceci permet d'éviter des défauts d'alimentation, tels que des bruits de commutation (« glitches ») que l'organe d'entrée 101 pourrait ne pas supporter et qui obligerait à prévoir des éléments de filtrage encombrants au niveau de l'unité de raccordement périphérique 10.2.

L'unité de raccordement périphérique 10.2 comprend en outre un module d'alimentation 15.2 monté en mode commun entre la ligne d'émission 2.a et la ligne de réception 2.b pour recevoir, via une isolation galvanique, le courant alternatif sur la liaison. L'isolation galvanique est assurée par un transformateur d'isolement 16.2 dont le primaire est relié au point milieu du primaire du transformateur 13.2 et au secondaire du transformateur 14.2. Le module d'alimentation 15.2 est isolé et assure ainsi l'émission de puissance sur la liaison 2.

Le module d'alimentation 15.2 de l'unité de raccordement périphérique comprend un circuit redresseur, généralement désigné en 18, qui comprend un pont de diodes et un condensateur.

L'unité de raccordement 10.2 est ici contenue dans un boîtier 17 d'une station d'accueil agencée pour recevoir le clavier 101. Le port de raccordement externe USB 12.2 débouche à l'extérieur du boîtier 21 pour permettre le raccordement du clavier 101 à l'interface USB/Ethernet 11.2 de l'unité de raccordement 10.2.

L'interface USB/Ethernet 11.2 peut comprendre plusieurs ports de raccordement externe pour servir de HUB et permettre le raccordement de plusieurs équipements périphériques.

Entre les modules de raccordement sont ici utilisées des interfaces Ethernet 100 Base T standards.

Le dispositif de l'invention assure la transmission d'une tension d'alimentation en signal alternatif, en mode commun sur la ligne d'émission et la ligne de réception (le V+ est transmis sur une des paires du câble Ethernet 22 et le V- est transmis sur l'autre paire). Dans une application aéronautique, on estime la puissance maximale transmissible à 30 VA (28 Veff et au moins 1 Aeff entre 10 kHz et 100 kHz). La régulation du signal d'alimentation se fait sur deux paramètres : la tension efficace et la forme d'onde du courant. Au niveau de la source, la tension efficace est mesurée (circuit 19) et le générateur est asservi (organe d'asservissement 20) pour fournir une tension prédéterminée, par exemple 28V, quelle que soit la forme du courant. Puis, un asservissement est réalisé sur la forme d'onde du courant (organe d'asservissement 21). Il s'agit plus particulièrement d'un asservissement sur une forme en sinus comme indiqué plus haut. Ceci permet de simplifier la partie réceptrice en limitant les perturbations électromagnétiques. En particulier, les bruits de commutation des diodes du pont de diodes du circuit redresseur 18 sont limités voir éliminés sans recourir à des éléments de filtrages encombrants. La fréquence choisie pour le signal, ici comprise de préférence entre 2 kHz et 100 kHz, est suffisamment basse pour ne pas perturber les communications et suffisamment élevée pour minimiser la taille du transformateur.

En courant continu, l'isolation est assurée par les transformateurs et, en courant alternatif, le couplage capacitif est minimisé du fait de la présence de transformateurs montés en frontal. Les couplages capacitifs sont faibles dans les transformateurs de couplage et il est possible d'ajouter des inductances mode commun en série sur chaque ligne 2.a, 2.b pour compenser la baisse de leur impédance en haute fréquence.

L'invention permet de limiter le nombre d'entrées/sorties des équipements.

Dans un mode de réalisation particulier, l'équipement électronique maître et l'équipement électronique périphérique sont deux calculateurs ou deux unités informatiques. Ainsi, le calculateur de l'équipement électronique périphérique est alimenté par l'équipement électronique maître. Seul l'équipement électronique maître dispose donc d'une alimentation, ce qui allège la structure du système informatique et en simplifie la maintenance.

On notera que les solutions classiques de transmission de puissance sur une liaison Ethernet procurent une isolation insuffisante en courant alternatif à haute fréquence car elles mettent en oeuvre des convertisseurs DC/DC classiques en interface avec les fonctions électroniques des équipements connectés, les convertisseurs autorisant des couplages capacitifs importants permettant la circulation des courants hautes fréquences.

Bien entendu, l'invention n'est pas limitée aux modes de réalisations décrits mais englobe toute variante entrant dans le champ de l'invention telle que définie par les revendications.

En particulier, les ports de raccordement externe peuvent être de tout type et par exemple USB, PS2, ARINC 429, bus CAN...

Le module d'alimentation 15.2 peut être un module numérique et peut comprendre un dispositif de correction du facteur de puissance ou PFC.

Une au moins des unités de raccordement peut comporter plusieurs ports USB.

## Revendications

1. Dispositif de connexion (1) d'un équipement électronique maître (10.1) à un équipement électronique périphérique (10.2), tous deux pourvus d'un port de raccordement externe d'un premier type, comportant une unité de raccordement maître et une unité de raccordement périphérique qui sont pourvues chacune d'un port de raccordement externe du premier type à l'équipement correspondant et qui sont reliées l'une à l'autre via une isolation galvanique par une liaison d'un deuxième type, à savoir Ethernet, comportant une ligne d'émission et une ligne de réception, chaque unité comportant une interface premier type/Ethernet reliée auxdites lignes et un module d'alimentation monté en mode commun entre les lignes d'émission et de réception pour émettre ou recevoir un courant alternatif sur la liaison, le module d'alimentation de l'unité de raccordement maître comprenant un organe de régulation agencé pour réaliser un asservissement sur une valeur efficace de tension et sur une forme de courant en sortie du module d'alimentation.

2. Dispositif selon la revendication 1, dans lequel le module de l'unité de raccordement maître comprend un convertisseur continu alternatif.

3. Dispositif selon la revendication 2, dans lequel le module d'alimentation de l'unité de raccordement périphérique comprend un pont de diodes et un condensateur.

4. Dispositif selon la revendication 1, dans lequel une au moins des unités de raccordement comporte plusieurs ports USB.

5. Station d'accueil d'un équipement d'entrée de données, comportant un boîtier renfermant l'unité de raccordement périphérique d'un Dispositif de connexion selon l'une quelconque des revendications précédentes.

## Patentansprüche

1. Verbindungsvorrichtung (1) zur Verbindung eines elektronischen Hauptgeräts (10.1) mit einem elektronischen Peripheriegerät (10.2), die alle beide mit einem externen Anschluss eines ersten Typs versehen sind, umfassend eine Hauptanschlusseinheit und eine periphere Anschlusseinheit, die jeweils mit einem externen Anschluss des ersten Typs zum Anschluss an das entsprechende Gerät versehen und miteinander über eine galvanische Trennung durch eine Verbindung eines zweiten Typs, nämlich Ethernet, verbunden sind, die eine Sendeleitung und eine Empfangsleitung umfasst, wobei jede Einheit eine Schnittstelle ersten Typs/Ethernet umfasst, die mit den Leitungen verbunden ist, sowie ein Versorgungsmodul, das im Gleichtakt zwischen der Sendeleitung und der Empfangsleitung angebracht ist, um über die Verbindung einen Wechselstrom auszusenden oder zu empfangen, wobei das Versorgungsmodul der Hauptanschlusseinheit ein Regelungsorgan umfasst, das so ausgebildet ist, dass es eine Regelung auf einen wirksamen Spannungswert und auf eine Stromform am Ausgang des Versorgungsmoduls durchführt.

2. Vorrichtung nach Anspruch 1, wobei das Versorgungsmodul der Hauptanschlusseinheit einen Gleichstrom-Wechselstrom-Wandler umfasst.

3. Vorrichtung nach Anspruch 2, wobei das Versorgungsmodul der peripheren Anschlusseinheit eine Diodenbrücke und einen Kondensator umfasst.

4. Vorrichtung nach Anspruch 1, wobei mindestens eine der Anschlusseinheiten mehrere USB-Anschlüsse umfasst.

5. Empfangsstation eines Dateneingabegeräts, umfassend ein Gehäuse, das die periphere Anschlusseinheit einer Verbindungsvorrichtung nach einem der vorhergehenden Ansprüche enthält.

## Claims

1. Device (1) for connecting a master electronic device (10.1) to a peripheral electronic device (10.2) both including an external connection port of a first type, the connection device including a master connection unit and a peripheral connection unit each of which includes an external connection port of the first type to the corresponding device and which are connected to one another with galvanic isolation by a connection of a second type, namely an Ethernet connection, including a send line and a receive line, each connection unit including an Ethernet/first type interface connected to said send and receive lines and a common-mode power supply module between said lines for sending or receiving an alternating current over the connection, the power supply module of the master connection unit including a servocontrol device adapted to control an RMS voltage value and a current waveform at the output of the power supply module.

2. Device according to claim 1, in which the power supply module of the master connection unit includes a direct current to alternating current converter.

3. Device according to claim 2, in which the power supply module of the peripheral connection unit includes a diode bridge and a capacitor.

4. Device according to claim 1, in which at least one of the connection units includes a plurality of USB ports.

5. Docking station for a data input device, including a housing enclosing the peripheral connection unit of a connection device according to any one of the preceding claims.
